# EUROPEAN PATENT APPLICATION

(11) **EP 4 693 674 A1**
(43) Date of publication of application: **11.02.2026**
(21) Application number: 24220559.9
(22) Date of filing: 17.12.2024
(51) Int. Cl.: H01M 50/342, H01M 50/103, H01M 50/209

(54) **BATTERY MODULE**

(30) Priority: 09.08.2024 KR 20240106588
(71) Applicant: Samsung SDI Co., Ltd., Yongin-si, Gyeonggi-do 17084 (KR)
(72) Inventor: KIM, Jeong Ho, Suwon-si 16678 (KR)
(74) Representative: Marks & Clerk LLP

(57) **Abstract**

A battery module includes a housing (10); at least one battery cell (20) in the housing; an insulating member (400) covering a surface of a battery cell of the at least one battery cell on which a vent portion (300) is located; a rigid member (500) on an outer surface of the insulating member and in which a through hole (510) corresponding to the vent portion is formed; and a rupture portion (600) arranged in the insulating member to correspond to the vent portion and configured to be ruptured if a gas is discharged due to an increase in an internal pressure of the battery cell.

## Description

### BACKGROUND

### 1. Field

Aspects of embodiments of the present disclosure relate to a battery module.

### 2. Discussion of Related Art

Secondary batteries are capable of being charged and discharged, unlike primary batteries that cannot be charged. Low-capacity secondary batteries may be used in small portable electronic devices, such as smartphones, feature phones, notebook computers, digital cameras, and camcorders, and large-capacity secondary batteries are widely used as power sources for driving motors of hybrid vehicles, electric vehicles, and the like, and as batteries for power storage. Such a secondary battery includes an electrode assembly including a positive electrode and a negative electrode, a case for accommodating the electrode assembly, an electrode terminal connected to the electrode assembly, and the like.

A secondary battery may be used as a battery module or battery pack including a plurality of unit battery cells connected in series and/or parallel to provide high energy density. The battery module or battery pack may be formed by connecting electrode terminals of a plurality of unit batteries to satisfy a desired amount of power, for example, to implement a high-power secondary battery for an electric vehicle.

The above information disclosed in this Background section is provided for enhancement of understanding of the background of the present disclosure, and, therefore, it may contain information that does not constitute related (or prior) art.

### SUMMARY

According to an aspect of embodiments of the present invention, a battery module is provided in which damage to an insulating member may be prevented or substantially prevented, and an adjacent battery cell may be protected from an effect of flames containing gas because the insulating member is easily ruptured when the gas is discharged due to an increase in pressure of a battery cell.

The above and other aspects and features of the present disclosure will be described in or will be apparent from the following description of some embodiments of the present disclosure.

According to one or more embodiments of the present invention, a battery module includes a housing; at least one battery cell in the housing; an insulating member covering a surface of a battery cell of the at least one battery cell on which a vent portion is located; a rigid member on an outer surface of the insulating member and in which a through hole corresponding to the vent portion is formed; and a rupture portion arranged in the insulating member to correspond to the vent portion and configured to be ruptured if a gas is discharged due to an increase in an internal pressure of the battery cell.

In one or more embodiments, the insulating member may include at least one of carbon fiber, glass fiber, and ceramic fiber.

In one or more embodiments, the insulating member may include aerogel or silica.

In one or more embodiments, a thickness of the insulating member may be in a range from 0.7 cm to 1.3 cm

In one or more embodiments, the rigid member may include at least one of steel, stainless steel, and aluminum.

In one or more embodiments, the vent portion may include a notch which is configured to be ruptured if the gas is discharged due to the increase in the internal pressure of the battery cell, and the rupture portion may include a first slit arranged to correspond to the notch.

In one or more embodiments, the notch may include a first notch located in a central portion of the vent portion and having a line shape extending in a direction, and second notches having intersection points at opposite end portions of the first notch and each having a line shape extending toward a circumference of the vent portion, wherein the first slit may include a center slit corresponding to the first notch and two end slits corresponding to the second notches, and the center slit and the two end slits may be spaced apart from each other.

In one or more embodiments, the first slit may be longer than the notch.

In one or more embodiments, the rupture portion may further include a second slit arranged to correspond to a circumference of the vent portion.

In one or more embodiments, the first slit and the second slit may be spaced apart from each other.

In one or more embodiments, the rupture portion may further include a third slit arranged to correspond to a gap between battery cells of the at least one battery cell.

In one or more embodiments, the first slit, the second slit, and the third slit may be configured to sequentially rupture according to the internal pressure of the battery cell.

In one or more embodiments, the insulating member may include an adhesive part and is attached to an upper surface of the battery cell.

In one or more embodiments, the adhesive part may be arranged to correspond to an outer side of a circumference of the vent portion.

In one or more embodiments, the adhesive part may include a double-sided tape attached to a lower surface of the insulating member.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the embodiments shown in the drawings:
FIG. 1 is a schematic perspective view illustrating a structure of a battery module according to an embodiment of the present invention;
FIG. 2 is a schematic perspective view illustrating a structure of a battery cell according to an embodiment of the present invention;
FIG. 3 is a schematic plan view illustrating the structure of the battery cell of FIG. 2;
FIG. 4 is a schematic cross-sectional view illustrating the structure of the battery cell of FIG. 2;
FIG. 5 is an enlarged schematic view illustrating a structure of a vent portion according to an embodiment of the present invention;
FIG. 6 is a perspective view for describing a rupture portion of an insulating member according to an embodiment of the present invention;
FIG. 7 is a schematic plan view illustrating the rupture portion of the insulating member according to an embodiment of the present invention;
FIG. 8 is a schematic cross-sectional view for describing a layout of the rupture portion of the insulating member according to an embodiment of the present invention;
FIG. 9 is a plan view illustrating the layout of the rupture portion of the insulating member according to an embodiment of the present invention;
FIG. 10 is an enlarged schematic view illustrating a region "A" of FIG. 9;
FIGS. 11A to 11C are views for describing an operation of the rupture portion of the insulating member according to an embodiment of the present invention;
FIG. 12 is a plan view illustrating another example of the rupture portion of the insulating member according to an embodiment of the present invention;
FIG. 13 is a plan view illustrating another example of the rupture portion of the insulating member according to an embodiment of the present invention;
FIG. 14 is a plan view illustrating a layout of an adhesive part of the insulating member according to an embodiment of the present invention; and
FIG. 15 is a view for describing assembly of the insulating member according to an embodiment of the present invention.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

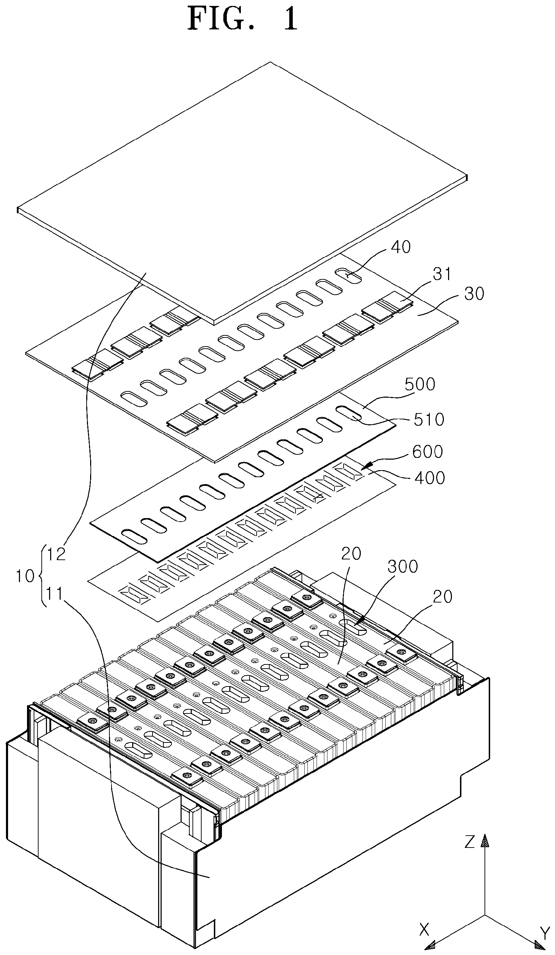

FIG. 1 is a schematic perspective view illustrating a structure of a battery module according to an embodiment of the present invention.

Referring to FIG. 1, a battery module 1 according to the present embodiment may include a housing 10, a battery cell 20, an insulating member 400, a rigid member 500, and a rupture portion 600.

The housing 10 may function as a structure for supporting the battery cell 20 and protecting the battery cell 20 from an external impact and foreign matter.

Herein, a longitudinal direction of the housing 10 may be a direction parallel to an X-axis in FIG. 1, and a width direction of the housing 10 may be a direction parallel to a Y-axis in FIG. 1.

The housing 10 may include a housing body 11 and a housing cover 12.

The housing body 11 may provide a space for accommodating the battery cell 20 therein. The housing body 11 according to the present embodiment may be formed in a box shape which is hollow and of which a side is open.

As an example, the open side of the housing body 11 may be disposed upward in FIG. 1. However, a cross-sectional shape of the housing body 11 is not limited to the quadrangular shape illustrated in FIG. 1, and a design of the shape may be changed to any of various shapes, such as a polygonal shape, a circular shape, and an elliptical shape.

The housing cover 12 may be coupled to the housing body 11 and may close an internal space of the housing body 11. The housing cover 12 according to the present embodiment may be formed having a generally plate shape. The housing cover 12 may be disposed to face an open side of the housing body 11, as an example, an upper side surface of the housing body 11. The housing cover 12 may be fixed to the housing body 11 by any of various coupling methods, such as bolting, welding, and press-fitting methods.

The battery cell 20 may function as a unit structure for storing and providing power in the battery module 1. The battery cell 20 may be disposed in the housing 10.

The battery cell 20 may be provided as one or more battery cells 20. In FIG. 1, an example of the battery cell 20 provided as a plurality of battery cells 20 is illustrated, but the battery cell 20 is not limited thereto, and the battery cell 20 may also be provided as a single battery cell 20.

If the plurality of battery cells 20 is provided, the plurality of battery cells 20 may be disposed in a plurality of columns in the housing 10. As an example, the plurality of battery cells 20 may be disposed in the plurality of columns in the longitudinal direction of the housing 10 (X-axis direction in FIG. 1). However, a layout shape of the plurality of battery cells 20 is not limited thereto, and the plurality of battery cells 20 may be disposed in a plurality of columns in the width direction of the housing 10 (Y-axis direction in FIG. 1), or may be disposed in a plurality of columns in the longitudinal direction and the width direction of the housing 10.

Herein, an example of the battery cell 20 which is an angular or prismatic lithium-ion secondary battery will be described. However, the present invention is not limited thereto, and the battery cell 20 may be a lithium polymer battery or a cylindrical battery, for example.

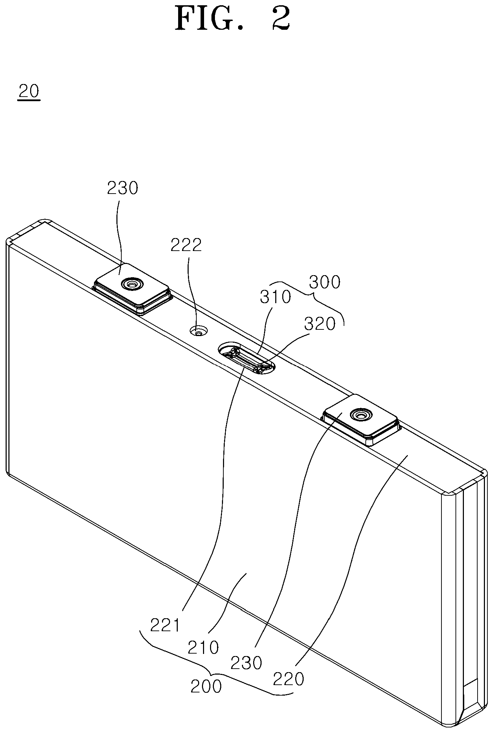

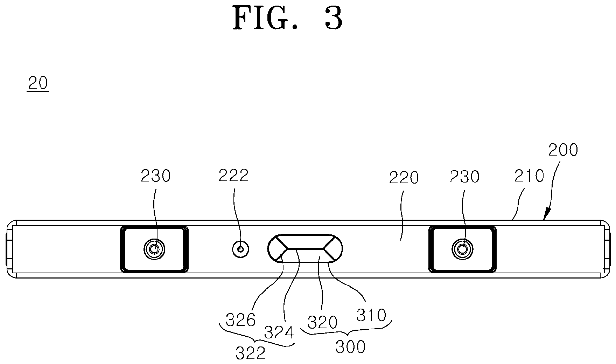

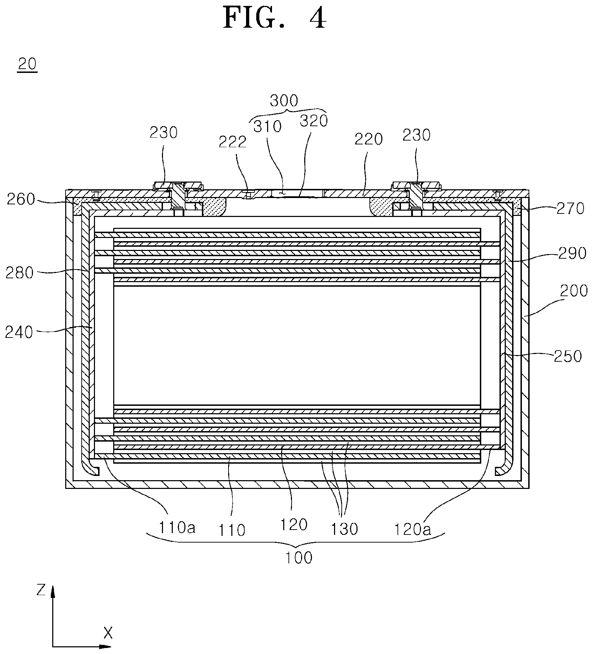

FIG. 2 is a schematic perspective view illustrating a structure of the battery cell according to an embodiment of the present invention; FIG. 3 is a schematic plan view illustrating the structure of the battery cell of FIG. 2; and FIG. 4 is a schematic cross-sectional view illustrating the structure of the battery cell of FIG. 2.

Referring to FIGS. 2 to 4, the battery cell 20 according to the present embodiment may include an electrode assembly 100, a cell case 200, and a vent portion 300.

The electrode assembly 100 may include a positive electrode 110, a negative electrode 120, and a separator 130 disposed between the positive electrode 110 and the negative electrode 120.

The positive electrode 110 and the negative electrode 120 may include coating portions which are regions on which active materials are applied on current collectors formed of a thin metal plate foil, and non-coating regions 110a and 120a which are regions on which the active materials are not applied.

In the electrode assembly 100, the separator 130, which is an insulator, is interposed between the positive electrode 110 and the negative electrode 120, and the separator 130, the positive electrode 110, and the negative electrode 120 may be wound in a jelly roll form. However, the electrode assembly 100 is not limited to this form and may be formed as a stack structure in which the positive electrode 110 and the negative electrode 120 which are formed of a plurality of sheets are alternately stacked with the separator 130 interposed therebetween.

The electrode assembly 100 may be provided as a single electrode assembly 100 or a plurality of electrode assemblies 100.

The cell case 200 may form an overall exterior of the battery cell 20. The cell case 200 may accommodate the electrode assembly 100 therein. The cell case 200 may include a conductive metal material, such as aluminum, an aluminum alloy, or steel plated with nickel.

The cell case 200 according to the present embodiment may include a case body 210 and a cap plate 220.

In an embodiment, the case body 210 may be formed in a rectangular hexahedron shape of which a surface is open. The open surface of the case body 210 may be disposed upward in the housing 10 and disposed to vertically face the housing cover 12.

The cap plate 220 may be coupled to the case body 210 and may seal the cell case 200. As an example, the cap plate 220 may be formed in a flat plate shape. The cap plate 220 may be disposed on the case body 210 to cover an open side of the case body 210. The cap plate 220 may be coupled to the case body 210 by any of various coupling methods, such as welding, bolting, and press-fitting methods.

The cell case 200 may further include a cell terminal 230.

In an embodiment, the cell terminal 230 may be installed to pass through the cap plate 220 and protrude outward from the cap plate 220. In an embodiment, an outer circumferential surface of an upper column of the cell terminal 230 may be machined as a screw, and the cell terminal 230 may be fixed to the cap plate 220 by a nut. However, the present invention is not limited thereto, and the cell terminal 230 may be formed as a rivet structure and rivet-coupled thereto, or welded to the cap plate 220, for example.

In an embodiment, the cell terminal 230 protruding outward from the cap plate 220 may be formed as a pair of cell terminals 230. The pair of cell terminals 230 may be individually connected to the positive electrode 110 and the negative electrode 120 of the electrode assembly 100. Accordingly, the pair of cell terminals 230 may function as a positive terminal and a negative terminal of the battery cell 20.

As an example, the cell terminals 230 may be electrically connected to a first current collector 240 and a second current collector 250 bonded to a positive non-coating region 110a and a negative non-coating region 120a by a welding process, respectively. The first current collector 240 and the second current collector 250 may function as a positive current collector and a negative current collector of the battery cell 20, respectively. More specifically, the pair of cell terminals 230 may be coupled to the first current collector 240 and the second current collector 250 by the welding process. However, the present invention is not limited thereto, and the cell terminals 230, the first current collector 240, and the second current collector 250 may be formed by being integrally coupled, for example.

The cell case 200 may further include the vent portion 300.

The vent portion 300 may be formed in a hole shape vertically passing through both, or opposite, surfaces of the cap plate 220. The vent portion 300 may function as a component for providing a passage through which flames, gas, smoke, and the like generated in the cell case 200 are discharged from the battery cell 20 if thermal runaway of the battery cell 20 occurs. A lower side of the vent portion 300 may be connected to an internal space of the case body 210. An upper side of the vent portion 300 may be connected to an external space of the cap plate 220. A design of a cross-sectional shape of the vent portion 300 may be varied to any of various shapes, such as an elliptical shape, a circular shape, and a polygonal shape.

The cell case 200 may further include an electrolyte injection port 222 which is formed to pass through the cap plate 220 and on which a sealing cap is installed.

An insulating member may be installed between the electrode assembly 100 and the cap plate 220. The insulating member may include a first lower insulating member 260 and a second lower insulating member 270, and the first lower insulating member 260 and the second lower insulating member 270 may be installed between the electrode assembly 100 and the cap plate 220.

An end of a separating member installed to face a side surface of the electrode assembly 100 may be installed between the insulating member and the cell terminal 230.

The separating member may include a first separating member 280 and a second separating member 290.

Ends of the first separating member 280 and the second separating member 290 installed to face a side surface of the electrode assembly 100 may be installed between the first lower insulating member 260 and the second lower insulating member 270 and the pair of cell terminals 230.

The pair of cell terminals 230 welded to the first current collector 240 and the second current collector 250 may be coupled to ends of the first lower insulating member 260, the second lower insulating member 270, the first separating member 280, and the second separating member 290.

The battery module 1 according to the present embodiment may further include a busbar holder 30 and a vent holder hole 40.

The busbar holder 30 may be disposed in the housing 10 and may function as a component for supporting a busbar 31.

The busbar holder 30 according to the present embodiment may be formed in a flat plate shape. Upper and lower surfaces of the busbar holder 30 may be disposed to respectively face the housing cover 12 and an upper surface of the battery cell 20, that is, the cap plate 220. The busbar holder 30 may be provided to include an electrically insulating polymer compound material.

The busbar 31 may be electrically connected to the battery cell 20. The busbar 31 may be fixed to the busbar holder 30 by any of various methods, such as welding, bolting, and press-fitting methods. The busbar 31 may be in contact with the cell terminal 230 of the battery cell 20. The busbar 31 may include a conductor, such as aluminum, nickel, or copper, to be electrically connected to the cell terminal 230.

The busbar 31 may be provided as a plurality of busbars 31. The plurality of busbars 31 may connect the plurality of battery cells 20 in series or parallel. A design of the number and an arrangement type of the plurality of busbars 31 may be varied according to a serial and parallel connecting structure and the like of the battery cells 20.

The vent holder hole 40 may function as a component for providing a discharge passage for gas, flames, and smoke discharged from the battery cell 20 in the busbar holder 30. The vent holder hole 40 according to the present embodiment may be formed in a hole shape vertically passing through the busbar holder 30. The vent holder hole 40 may be disposed to face the vent portion 300 of the battery cell 20.

The vent holder hole 40 may be provided as a plurality of vent holder holes 40. The plurality of vent holder holes 40 may be disposed in the longitudinal direction of the housing 10. In an embodiment, the number of the vent holder holes 40 may correspond to the number of battery cells 20, and each of the vent holder holes 40 may individually face the vent portion 300 of a different one of the battery cells 20.

A cross-sectional area of the vent holder hole 40 may be smaller than a cross-sectional area of the vent portion 300 of the battery cell 20. Accordingly, the busbar holder 30 may press an edge region of a blocking member 320 to prevent or substantially prevent the blocking member 320 from being separated from a vent hole 310 when the battery cell 20 operates normally.

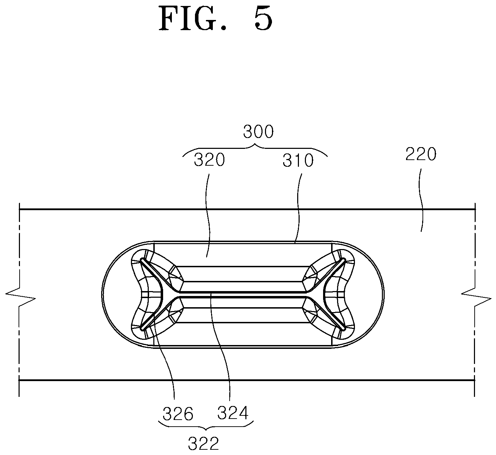

FIG. 5 is an enlarged schematic view illustrating a structure of the vent portion according to an embodiment of the present invention.

Referring to FIG. 5, the vent portion 300 may include the vent hole 310 and the blocking member 320.

The blocking member 320 may be installed in the vent hole 310 and closed or opened in conjunction with a change in internal pressure of the cell case 200. That is, the blocking member 320 may maintain a closed state to seal the vent hole 310 when the battery cell 20 operates normally. The blocking member 320 may be opened when an internal pressure of the cell case 200 rises above a certain pressure (e.g., a set pressure) due to overcharging or fire occurrence, for example, of the battery cell 20 and may discharge flames, gas, smoke, and the like generated in the cell case 200 to the outside of the cell case 200.

The vent portion 300 may include a notch 322 which is ruptured when gas is discharged due to an increase in internal pressure of the battery cell 20.

The notch 322 is formed in the blocking member 320, and a thickness of the notch 322 may be smaller than those of other regions of the blocking member 320. In an embodiment, the notch 322 may include a first notch 324 located in a central portion of the vent portion 300 and having a line shape extending in a direction, and second notches 326 having intersection points at both, or opposite, end portions of the first notch 324 and each having a line shape extending toward a circumference of the vent portion 300.

The insulating member 400 may function as a component for preventing or substantially preventing an event of the battery cell 20 from spreading to an adjacent battery cell 20.

The insulating member 400 may include at least any of carbon fiber, glass fiber, and ceramic fiber. In the insulating member 400, an aerogel or silica may be included in the insulating fiber. The aerogel or silica may be impregnated in the insulating member 400 to maximize or increase an insulating performance.

In an embodiment, the insulating member 400 may be formed to have a thickness of 0.7 cm to 1.3 cm. In an embodiment, the insulating member 400 may be formed to have a thickness of 1 cm.

In an embodiment, the thickness of the insulating member 400 is small as described above, and the insulating member 400 can thereby be ruptured by itself when an event of the battery cell 20 occurs, and an increase in bending pressure of the battery cell 20 can be minimized or reduced by the rupture portion 600.

The insulating member 400 may be provided to cover a surface of the battery cell 20 on which the vent portion 300 is formed. In an embodiment, the insulating member 400 may be disposed on the upper surface of the battery cells 20 disposed in the plurality of columns in the housing 10.

The rigid member 500 may be provided on an outer surface of the insulating member 400. The rigid member 500 may function as a component for preventing or substantially preventing delamination of the insulating member 400 when an event of the battery cell 20 occurs.

The rigid member 500 may be disposed to face the insulating member 400. The rigid member 500 may be provided on the outer surface of the insulating member 400, and a through hole 510 corresponding to the vent portion 300 may be formed in the rigid member 500.

The through hole 510 may correspond to a location and a size of the vent portion 300, and, if an event occurs at the specific battery cell 20 among the battery cells 20 and the corresponding vent portion 300 is opened, a high-temperature discharge material may be discharged through the through hole 510. In this case, the rigid member 500 may prevent or substantially prevent delamination of the insulating member 400, and the rigid member 500 may prevent or substantially prevent the delamination from spreading to the adjacent battery cell 20 through a gap between the battery cell 20 and the insulating member 400.

In an embodiment, the rigid member 500 may include at least one of steel, stainless steel, and aluminum.

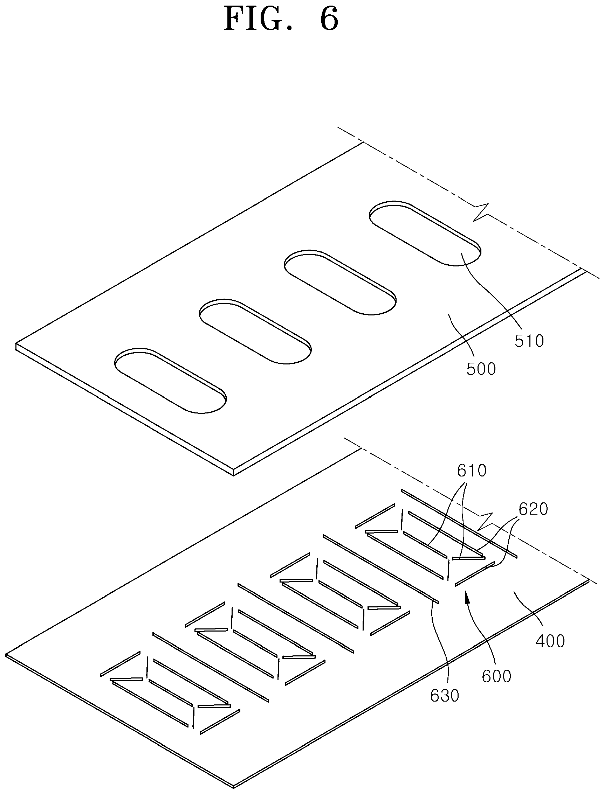

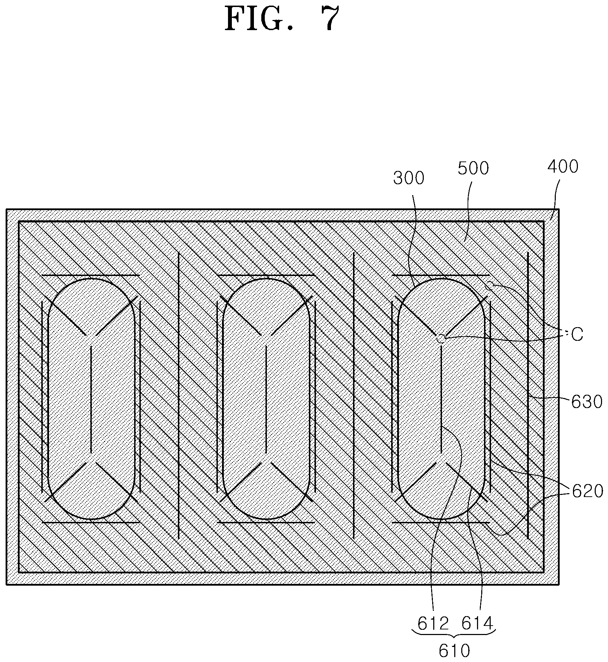

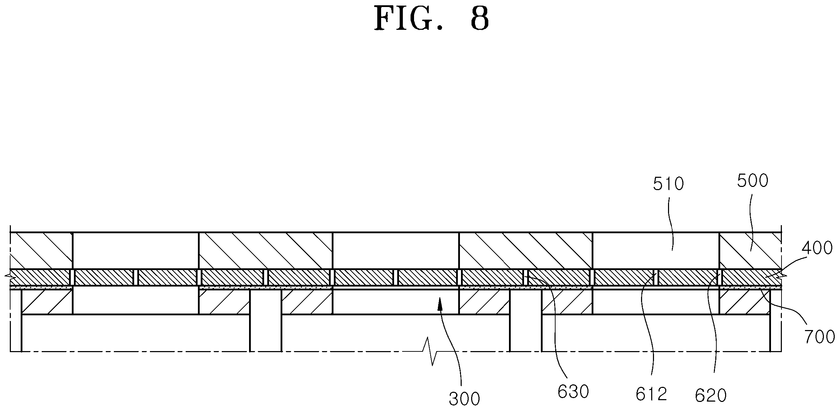

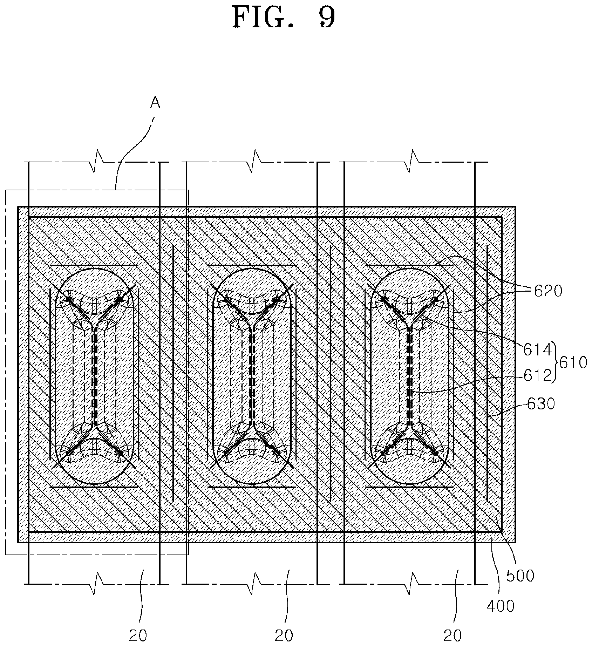

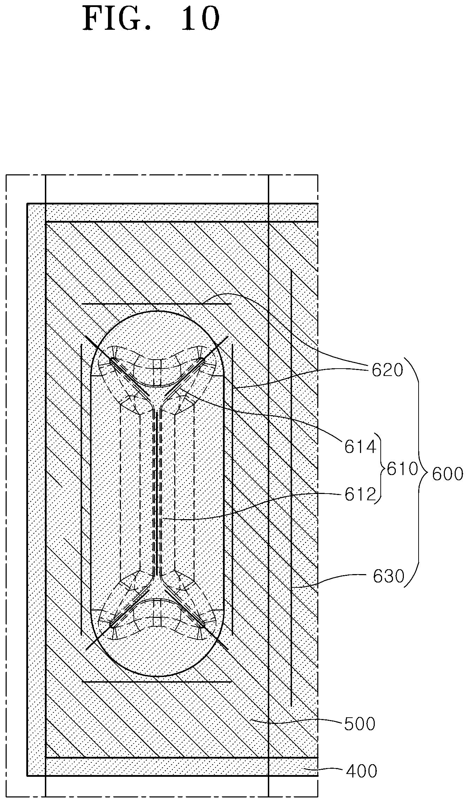

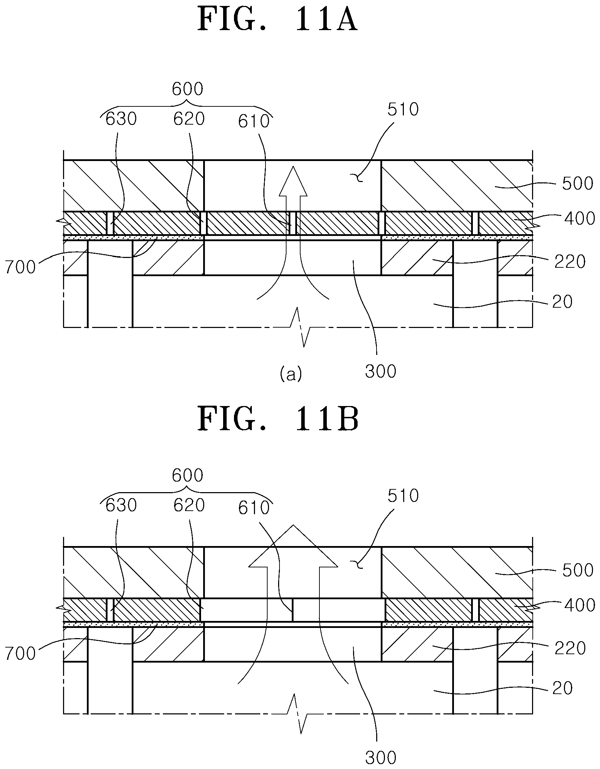

FIG. 6 is a perspective view for describing the rupture portion of the insulating member according to an embodiment of the present invention; FIG. 7 is a schematic plan view illustrating the rupture portion of the insulating member according to an embodiment of the present invention; FIG. 8 is a schematic cross-sectional view for describing a layout of the rupture portion of the insulating member according to an embodiment of the present invention; FIG. 9 is a plan view illustrating the layout of the rupture portion of the insulating member according to an embodiment of the present invention; FIG. 10 is an enlarged schematic view illustrating a region "A" of FIG. 9; and FIGS. 11A to 11C are view for describing an operation of the rupture portion of the insulating member according to an embodiment of the present invention.

Referring to FIGS. 6 to 11C, the rupture portion 600 according to the present embodiment may be formed to correspond to the vent portion 300 in the insulating member 400 and may be easily ruptured by gas due to an increase in internal pressure of the battery cell 20.

Accordingly, since the insulating member 400 may be easily ruptured due to a force of the gas vertically discharged through the vent portion 300, damage to the insulating member 400 due to an effect of flames containing horizontally deployed gas can be prevented or substantially prevented, and an adjacent battery cell 20 can be protected.

The rupture portion 600 may include a first slit 610 formed to correspond to the notch 322 of the vent portion 300. As described above, the notch 322 may include the first notch 324 located in the central portion of the vent portion 300 and having the line shape extending in a direction and the second notches 326 having the intersection points at both, or opposite, end portions of the first notch 324 and each having the line shape extending toward the circumference of the vent portion 300, and the first slit 610 may have a center slit 612 corresponding to the first notch 324 and two end slits 614 corresponding to the second notches 326.

In an embodiment, the second notches 326 and the two end slits 614 may be formed in the line shapes symmetrically extending in diagonal directions from the intersection points.

In an embodiment, the first slit 610 may be formed to have a length greater than that of the notch 322. As the length of the first slit 610 is relatively large, an increase in bending pressure of the battery cell 20 according to application of the insulating member 400 can be minimized or reduced.

As illustrated in FIG. 11A, the first slit 610 may be ruptured due to vertically deployed gas to discharge flames containing the gas to the outside, horizontal deployment of the flames containing the gas can be blocked.

In an embodiment, the center slit 612 and the two end slits 614 may be formed apart from each other. As illustrated in FIG. 7, as facing portions C of the center slit 612 and the two end slits 614 are connected along lengths (e.g., predetermined lengths), undesired opening of the center slit 612 and the two end slits 614 can be prevented or substantially prevented, and the insulating performance can be maintained when the insulating member 400 is handled.

The rupture portion 600 may include a second slit 620 formed to correspond to the circumference of the vent portion 300. The second slit 620 may be provided outside the vent portion 300 and easily ruptured due to vertically deployed gas.

As the second slit 620 prevents or substantially prevents the delamination of the insulating member 400 with the first slit 610, spread of flames containing gas to the adjacent battery cell 20 can be prevented or substantially prevented.

As illustrated in FIG. 11B, even if delamination of surrounding portions of the first slit 610 occurs due to gas vertically deployed through the first slit 610, the second slit 620 formed to correspond to the circumference of the vent portion 300 can be opened, and delamination of an outer side of the second slit 620 can be prevented or substantially prevented.

Accordingly, flames containing gas can be prevented or substantially prevented from horizontally spreading through a gap between the battery cell 20 and the insulating member 400.

In an embodiment, the first slit 610 and the second slit 620 may be formed apart from each other. As illustrated in FIG. 7, because the facing portions C of the first slit 610 and the second slit 620 are connected along the lengths (e.g., predetermined lengths), undesired opening of the first slit 610 and the second slit 620 can be prevented or substantially prevented, and the insulating performance can be maintained when the insulating member 400 is handled.

In an embodiment, the rupture portion 600 may include a third slit 630 formed to correspond to a gap between the plurality of battery cells 20.

As the third slit 630 prevents or substantially prevents delamination of the insulating member 400 with the first slit 610 and the second slit 620, spread of flames containing gas to the adjacent battery cell 20 can be prevented or substantially prevented.

The third slit 630 may be formed in the Y-axis direction. That is, the third slit 630 may be formed in a line shape formed between the adjacent battery cells 20 in a longitudinal direction of the battery cell 20.

In an embodiment, the third slit 630 is disposed between the battery cell and the adjacent battery cell 20, and a height tolerance of each battery cell 20 can be ignored or mitigated, and spread of flames containing gas to the adjacent battery cell 20 can be prevented or substantially prevented.

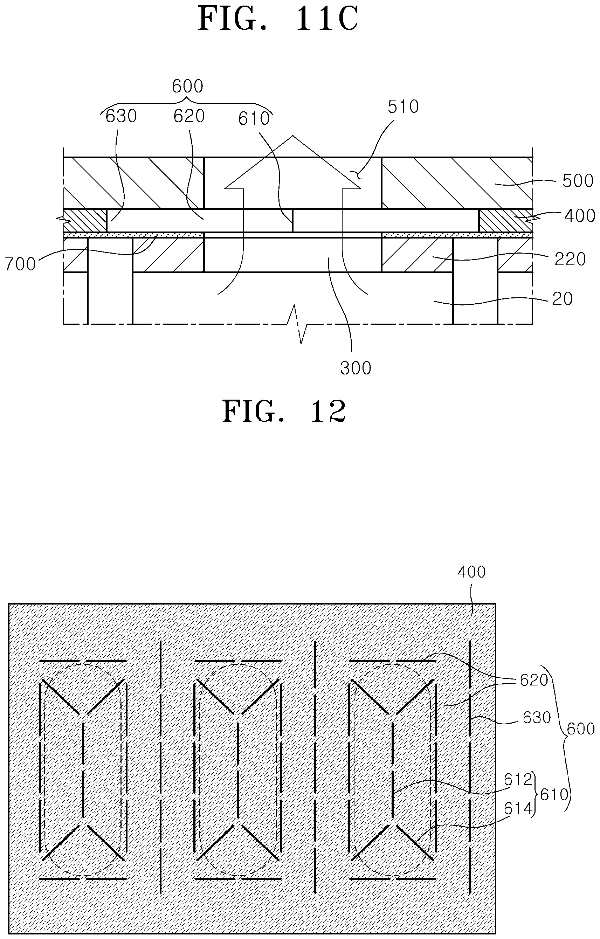

If an internal pressure of the battery cell 20 in which an event occurs is high, and the first slit 610 and the second slit 620 are not sufficient against outburst of vertically deployed gas, as illustrated in FIG. 11C, the third slit 630 is opened such that an outer side of the third slit 630 is prevented or substantially prevented from delaminating. Therefore, flames containing gas may be prevented or substantially prevented from horizontally spreading through the gap between the battery cell 20 and the insulating member 400, and thus the adjacent battery cell 20 can be protected.

As described above, since the first slit 610, the second slit 620, and the third slit 630 may be sequentially ruptured according to an internal pressure of the battery cell 20, horizontal spread of flames containing gas can be prevented or substantially prevented in multiple stages, thereby securing stability.

In an embodiment, an adhesive part 700 may be provided on the insulating member 400 and attached to the upper surface of the battery cell 20.

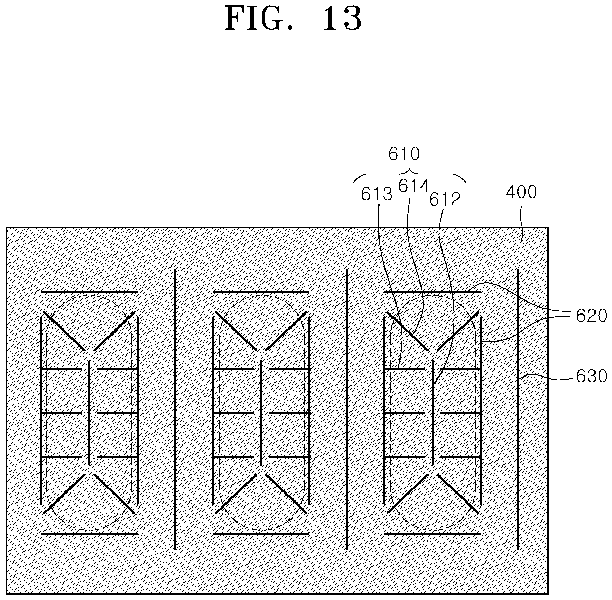

FIG. 12 is a plan view illustrating another example of the rupture portion of the insulating member according to an embodiment of the present invention; and FIG. 13 is a plan view illustrating another example of the rupture portion of the insulating member according to an embodiment of the present invention.

Referring to FIG. 12, a first slit 610, a second slit 620, a third slit 630 may be formed in a shape in which a plurality of lines are disposed apart from each other. Accordingly, unification of an insulating member 400 may be maintained, undesired opening of the first slit 610, the second slit 620, and the third slit 630 may be prevented or substantially prevented when the insulating member 400 is handled, and, thus, workability can be improved, and the insulating performance can be maintained.

In an embodiment, referring to FIG. 13, a first slit 610 may include an auxiliary slit 613. The auxiliary slit 613 may be provided as a plurality of auxiliary slits 613 extending in a direction perpendicular to a center slit 612 of the first slit 610. Accordingly, an increase in bending pressure of a battery cell 20 can be minimized or reduced.

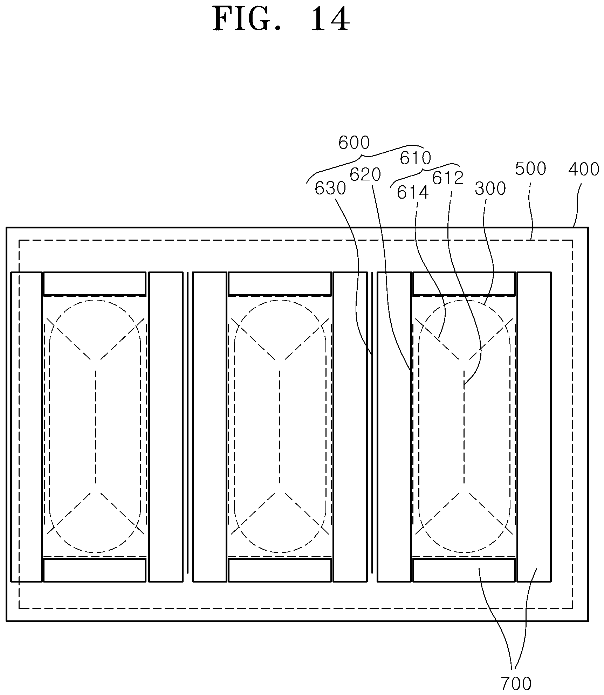

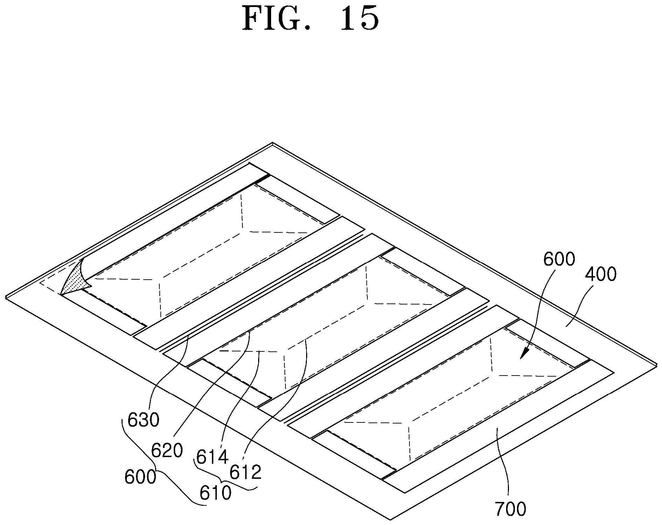

FIG. 14 is a plan view illustrating a layout of the adhesive part of the insulating member according to an embodiment of the present invention; and FIG. 15 is a view for describing assembly of the insulating member according to an embodiment of the present invention.

Referring to FIGS. 14 and 15, the adhesive part 700 according to the present embodiment may be formed to correspond to an outer side of the circumference of the vent portion 300.

In an embodiment, the adhesive part 700 may be formed as a double-sided tape attached to a lower surface of the insulating member 400. The adhesive part 700 may prevent or reduce a number of parts from increasing and simplify an assembly process. The adhesive part 700 may be formed on the lower surface of the insulating member 400 in advance and stocked, and attached to the corresponding vent portion 300 of the battery cell 20 exposed upward from the battery module 1 which is semi-assembled when the battery module 1 is manufactured.

In an embodiment, a region of the adhesive part 700 is formed in an individual quadrangular shape which covers the vent portion of the battery cell 20. The region of the adhesive part 700 may be formed outside the second slit 620.

Accordingly, the vent portion of the battery cell 20 disposed around the vent portion 300 of the battery cell 20, in which an abnormality occurs, may maintain fixation of the insulating member 400, and thus horizontal spread of flames containing gas can be blocked.

According to embodiments of the above-described present invention, an insulating member can be easily ruptured when flames containing gas are discharged due to an increase in pressure of a battery cell, and damage to the insulating member due to an effect of the flames containing gas can thereby be prevented or substantially prevented, and an adjacent battery cell can be protected. In one or more embodiments, a plurality of rupture portions is formed at each section, and the plurality of rupture portions can be sequentially ruptured due to vertically discharged flames containing gas, and, thus, stability can be secured.

According to embodiments of the present invention, the rupture portions formed at each section are disposed apart from each other, and opening of the rupture portions can be prevented or substantially prevented when the insulating member is handled, and, further, the insulating member on which an adhesive part is formed can be attached to an upper portion of the battery cell in a semi-assembled state, and the assemblability can thereby be improved.

According to embodiments of the present invention, an insulating member can be easily ruptured when flames containing gas are discharged due to an increase in pressure of a battery cell, and damage to the insulating member due to an effect of the flames containing gas can thereby be prevented or substantially prevented, and an adjacent battery cell can be protected. Further, heat spread to a large area of the battery cell can be prevented or substantially prevented, and heat spread due to high-temperature and high-pressure convection occurring around a vent portion of the battery cell can also be prevented or substantially prevented.

According to one or more embodiments of the present invention, a plurality of rupture portions is formed at each section and the plurality of rupture portions can be sequentially ruptured due to vertically discharged flames containing gas, and delamination of the insulating member can thereby be prevented or substantially prevented.

According to one or more embodiments of the present invention, the rupture portions formed at each section are disposed apart from each other, and opening of the rupture portions can be prevented or substantially prevented when the insulating member is handled.

According to one or more embodiments of the present invention, a third slit is formed between battery cells, a height tolerance of each battery cell can be ignored, and an adjacent battery cell can be ultimately protected by the third slit even when a delamination phenomenon of the insulating member occurs due to a force generated when flames containing gas are discharged through the vent portion of the battery cell which operates abnormally.

According to one or more embodiments of the present invention, the insulating member on which an adhesive part is formed in advance can be attached to an upper portion of the battery cell in a semi-assembled state, and the assemblability can thereby be improved.

According to one or more embodiments of the present invention, the adhesive part of the insulating member is disposed to cover the vent portion of the battery cell, and fixation of the insulating member of the adjacent battery cell is maintained, and, thus, it advantageously protects against flames.

However, aspects, effects, and advantages obtainable through the present disclosure are not limited to the above, and other technical aspects, effects, and advantages that are not mentioned will be clearly understood by those skilled in the art from the description of the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the claims.

## Claims

1. A battery module comprising:
a housing;
at least one battery cell in the housing;
an insulating member covering a surface of a battery cell of the at least one battery cell on which a vent portion is located;
a rigid member on an outer surface of the insulating member and in which a through hole corresponding to the vent portion is formed; and
a rupture portion arranged in the insulating member to correspond to the vent portion and configured to be ruptured if a gas is discharged due to an increase in an internal pressure of the battery cell.

2. The battery module as claimed in claim 1, wherein the insulating member comprises at least one of carbon fiber, glass fiber, and ceramic fiber.

3. The battery module as claimed in claim 1 or claim 2, wherein the insulating member comprises aerogel or silica.

4. The battery module as claimed in any one of the preceding claims, wherein a thickness of the insulating member is from 0.7 cm to 1.3 cm

5. The battery module as claimed in any one of the preceding claims, wherein the rigid member comprises at least one of steel, stainless steel, and aluminum.

6. The battery module as claimed in any one of the preceding claims, wherein
the vent portion comprises a notch which is configured to be ruptured if the gas is discharged due to the increase in the internal pressure of the battery cell, and
the rupture portion comprises a first slit arranged to correspond to the notch.

7. The battery module as claimed in claim 6, wherein the notch comprises:
a first notch located in a central portion of the vent portion and having a line shape extending in a direction; and
second notches having intersection points at opposite end portions of the first notch and each having a line shape extending toward a circumference of the vent portion,
wherein the first slit comprises a center slit corresponding to the first notch and two end slits corresponding to the second notches, and
the center slit and the two end slits are spaced apart from each other.

8. The battery module as claimed in claim 6 or claim 7, wherein the first slit is longer than the notch.

9. The battery module as claimed in claim 6, claim 7 or claim 8, wherein the rupture portion further comprises a second slit arranged to correspond to a circumference of the vent portion.

10. The battery module as claimed in claim 9, wherein the first slit and the second slit are spaced apart from each other.

11. The battery module as claimed in claim 9 or claim 10, wherein the rupture portion further comprises a third slit arranged to correspond to a gap between battery cells of the at least one battery cell.

12. The battery module as claimed in claim 11, wherein the first slit, the second slit, and the third slit are configured to sequentially rupture according to the internal pressure of the battery cell.

13. The battery module as claimed in any one of the preceding claims, wherein the insulating member comprises an adhesive part and is attached to an upper surface of the battery cell.

14. The battery module as claimed in claim 13, wherein the adhesive part is arranged to correspond to an outer side of a circumference of the vent portion.

15. The battery module as claimed in claim 13 or claim 14, wherein the adhesive part comprises a double-sided tape attached to a lower surface of the insulating member.
